Europäisches Patentamt

European Patent Office

Office européen des brevets

(11) Veröffentlichungsnummer: **0 273 062 B1**

# EUROPÄISCHE PATENTSCHRIFT

(45) Veröffentlichungstag der Patentschrift: **18.09.91**

(21) Anmeldenummer: **86118072.7**

(22) Anmeldetag: **24.12.86**

(51) Int. Cl.⁵: **A01B 15/20**, A01B 3/421, A01B 63/32, A01B 15/14

(54) **Drehpflug mit einer Schnittbreitenverstelleinrichtung für alle Pflugkörper.**

(43) Veröffentlichungstag der Anmeldung:
**06.07.88 Patentblatt 88/27**

(45) Bekanntmachung des Hinweises auf die
Patenterteilung:
**18.09.91 Patentblatt 91/38**

(84) Benannte Vertragsstaaten:
**AT DE FR GB IT SE**

(56) Entgegenhaltungen:
EP-A- 0 062 734
DE-A- 3 151 302
DE-A- 3 218 631
DE-U- 8 137 737
DE-U- 8 503 948

(73) Patentinhaber: **Rabewerk GmbH + Co.**

**W-4515 Bad Essen(DE)**

(72) Erfinder: **Albers, Heinrich, Dipl.-Ing.**
**Rabber 32**
**W-4515 Bad Essen 1(DE)**
Erfinder: **Becker, Ignaz, Dipl.-Ing.**
**In der Hegge 2**
**W-4994 Pr. Oldendorf(DE)**

(74) Vertreter: **Missling, Arne, Dipl.-Ing.**
**Patentanwalt Bismarckstrasse 43**
**W-6300 Giessen(DE)**

## Beschreibung

Die Erfindung betrifft einen Drehpflug mit einem Pflugvordergestell, mit einer Drehachse für das Wenden der Pflugkörper, mit einer Schnittbreiteneinstellvorrichtung für den ersten Pflugkörper und einem gelenkig mit dieser verbundenen, die Pflugkörper tragenden Pflugrahmen, der unmittelbar oder mittels zweier zwischen Pflugrahmen und Pflugvordergestell angeschlossener Lenker mit dem drehbaren Teil des Pflugvordergestells verbunden ist, die Pflugkörper schwenkbar mittels einer Konsole am Pflugrahmen befestigt sind, alle Konsolen über eine eine Parallelführung bewirkende Stange untereinander verbunden sind, zum Verschwenken des Pflugrahmens ein zwischen diesem und dem Pflugvordergestell wirkender Hydraulikzylinder dient, die Konsole eines der Pflugkörper oder die die Parallelführung der Pflugkörper bewirkende Stange über einen Lenker mit dem Pflugvordergestell verbunden ist und der Lenker mit der Konsole des ersten Pflugkörpers, dem Pflugrahmen und dem Pflugvordergestell ein Gelenkviereck bildet.

Ein Pflug der vorstehend genannten Art ist z.B.aus der DE OS 31 51 302 bekannt, sowie in einem nicht zum Stand der Technik gehörigen Vorschlag der Patentanmelderin beschrieben. Derartige Pflüge gestatten es, zum einen den Zugkraftbedarf des Pfluges an die vorhandene Schlepperleistung anzupassen und zum anderen die Anpassung so zu wählen, daß der Schlepper immer im optimalen Leistungsbereich gefahren werden kann bzw. der Schlupf der Hinterräder ein vertretbares Maß nicht übersteigt. Hierdurch wird eine optimale Treibstoffausnutzung erhalten.

Die Einstellbarkeit der Schnittbreite der Pflugkörper zur Beeinflussung der Zugkraft wird immer dann vorteilhaft angewendet werden können, wenn z.B. für bestimmte Feldfrüchte oder auch zu bestimmten Jahreszeiten unterschiedlich tief gepflügt werden muß. Des weiteren ist auch eine Schnittbreitenveränderung bei Bergauf- und Bergabfahrt vorteilhaft. Überdies kommt es vor, daß mit ein und demselben Pflug unterschiedliche Bodenqualitäten bearbeitet werden müssen, und dies bei verschiedenen Witterungsbedingungen. In der DE OS 31 51 302 wird eine Vorrichtung zur Schnittbreitenverstelleinrichtung vorgeschlagen, bei der bei einer Verstellung der Schnittbreite sämtlicher Pflugkörper zum einen die Schnittbreite des ersten Pflugkörpers wie auch der Vorwerkzeuge verändert wird und zum anderen wird bei der Schnittbreitenverstellung gleichzeitig eine Zugpunktkorrektur durchgeführt.

Bei derartigen Pflügen sollte jedoch zur Drehrleichterung vor dem Wenden der Pflugkörper der Schwerpunkt zur oder in die ideelle Drehachse verschoben werden, worauf dann das Wenden der Pflugkörper mit geringerer Drehenergie durchgeführt werden kann. Im Anschluß hieran werden die Pflugkörper in ihre Ausgangslage zurückverschoben. Bei einem derartigen Verschieben der Pflugrahmens tritt jedoch der Nachteil ein, daß bei der Rahmenverschwenkung gleichzeitig eine Verschwenkung der Konsolen mit den Pflugkörpern erfolgt, was zum einen einen erhöhten Energiebedarf erfordert und zum anderen einen erhöhten Verschleiß bedeutet. In dem vorhergenannten Vorschlag der Patentanmelderin wird dieses Problem dadurch gelöst, daß der Lenker, der die Konsolen der Pflugkörper mit dem Pflugvordergestell verbindet, vom Pflugvordergestell gelöst und am Pflugrahmen angelenkt wird, wodurch erreicht wird, daß bei einer Rahmenverschwenkung vor dem Wenden der Pflugkörper kein Verdrehen der Konsolen erfolgt. Hierdurch wird der Verschleiß der Konsolen verringert und auch der nötige Energiebedarf für das Wenden der Pflugkörper. Der Nachteil dieser Vorrichtung besteht jedoch darin, daß jedes Mal der Lenker vom Pflugvordergestell abgebaut werden muß und auf die entsprechende Länge gebracht wieder am Pflugrahmen angeschlossen werden muß, wenn man auf einem bestimmten Feld, beispielsweise in Hanglagen, während des Pflügens Schnittbreitenänderungen vornehmen will. In der umgesetzten Stellung des Lenkers ist keine Schnittbreitenkorrektur aller Pflugkörper mittels Hydraulikzylinder während des Pflügens mehr möglich. Eine derartig einfache Konstruktion bietet sich immer dann an, wenn in der Ebene und bei gleichmäßigen Bodenqualitäten in der gleichen Tiefe gepflügt werden soll. Trifft man jedoch auf ein Feld mit unterschiedlichen Bodenqualitäten, oder aber auf ein Feld, bei dem ein Pflügen am Hang erforderlich ist, so müßte der Lenker umgesetzt werden, und dann müßte man das beim Drehen des Pfluges immer wiederkehrende Schwenken der Konsolen auf dem Rahmen in Kauf nehmen. Es hat sich hier gezeigt, daß in der Praxis unter diesen Bedingungen eine mittlere Schnittbreite gewählt wird, die nicht der optimalen Schnittbreite für die beste Energieausnutzung entspricht.

Der Erfindung liegt die Aufgabe zugrunde, einen Drehpflug der eingangs genannten Art so auszubilden, daß dieser bei geringem konstruktiven Aufwand und in einfachster Weise von einem Betriebszustand, bei dem durch eine Rahmenverschwenkung gleichzeitig eine Verstellung der Schnittbreite aller Pflugkörper erfolgt, in einen Betriebszustand, bei dem bei einer Rahmenverschwenkung keine Schnittbreitenveränderung erfolgt, umzustellen ist und bei dem während des Drehens die Einstellung der Schnittbreite beibehalten bleibt.

Diese Aufgabe wird mit den Merkmalen des Anspruches 1 gelöst.

Gemäß der Erfindung wird somit bei einem eingangs beschriebenen Pflug der Pflugrahmen gegenüber dem Pflugvordergestell mittels zweier Hydraulikzylinder abgestützt, wobei die beiden Hydraulikzylinder so geschaltet sind, daß der erste und der zweite Hydraulikzylinder mit einem Ende an einen gemeinsamen Bauteil angeschlossen sind, wie dies z.B. ein verlängertes Teil der Konsole, der drehbare Teil des Pflugvordergestells oder aber ein Hebel sein kann, der schwenkbar am Pflugvordergestell oder am Pflugrahmen angeordnet ist, wobei seine Schwenkachse parallel zur Schwenkachse des Pflugrahmens liegt. Sofern der Pflugrahmen über eine reelle Achse am Pflugvordergestell angeordnet ist, kann die Schwenkachse des Hebels mit der Schwenkachse des Pflugrahmens zusammenfallen. Das andere Ende des ersten Hydraulikzylinders ist entweder am Pflugrahmen oder aber an dem genannten Hebel angeordnet. Das andere Ende des zweiten Hydraulikzylinders ist wiederum entweder am drehbaren Teil des Pflugvordergestells oder aber an den schwenkbar gelagerten Konsolen der Pflugkörper oder aber an den die Parallelführung bewirkenden Teilen befestigt.

Als vorteilhaft hat sich herausgestellt, daß der zweite Hydraulikzylinder den Lenker ersetzen kann, der den Grad der Verstellung sämtlicher Pflugkörper beim Pflugrahmenverschwenken festlegt. In diesem Fall muß der zweite Hydraulikzylinder entsprechend angeordnet und dimensioniert werden. Als kostengünstiges Ausführungsbeispiel hat sich eine Ausführungsform herausgestellt, bei der die beiden Hydraulikzylinder an der Konsole des ersten Pflugkörpers angeschlossen sind, wobei die jeweils anderen Enden der Hydraulikzylinder am Pflugrahmen bzw. am drehbaren Teil des Pflugvordergestells angeschlossen sind.

Bei einer weiteren vorteilhaften Ausführungsform sind die beiden Hydraulikzylinder am drehbaren Teil des Pflugvordergestells angeschlossen, wobei ihre anderen Enden an der Konsole bzw. am Pflugrahmen angreifen. Der Hebel kann bei diesem Ausführungsbeispiel entfallen. Soll bei einer Rahmenverschwenkung gleichzeitig eine Verstellung sämtlicher Pflugkörper erfolgen, so wird der zweite Hydraulikzylinder gesperrt, so daß dieser als Lenker wirkt. Soll bei einer Rahmenverschwenkung keine Verstellung der Pflugkörper erfolgen, so werden beide Hydraulikzylinder gleichsinnig mit Drucköl beaufschlagt und gleichsinnig ausgefahren, so daß die Konsole relativ zum Pflugrahmen während des Verschwenkweges des Pflugrahmens ihre Stellung zu diesem beibehält.

Bei einem dritten vorteilhaften Ausführungsbeispiel ist mit dem drehbaren Teil des Pflugvordergestells oder dem Pflugrahmen ein Hebel verbunden, dessen Schwenkachse parallel zur Schwenkachse des Pflugrahmens liegt. An diesem Hebel sind die beiden Hydraulikzylinder angeschlossen, während die anderen Enden der Hydraulikzylinder am drehbaren Teil des Pflugvordergestells und am Pflugrahmen angreifen. Soll der Pflugrahmen verschwenkt werden, ohne daß eine Verschwenkung sämtlicher Pflugkörper erfolgt, so wird der erste Hydraulikzylinder, der den Hebel mit dem Pflugrahmen verbindet, gesperrt, so daß dieser als starrer Lenker wirkt, so daß bei einer Verschiebung des Hebels und damit des Pflugrahmens die Pflugkörper ihre Lage zum Pflugrahmen beibehalten.

Eine weitere Lösung der der Erfindung zugrunde liegenden Aufgabe kann dadurch erreicht werden, daß der erste und der zweite Hydraulikzylinder gemeinsam am Pflugrahmen angeschlossen sind, während das andere Ende des ersten Hydraulikzylinders am drehbaren Teil des Pflugvordergestells angreift. Das zweite Ende des zweiten Hydraulikzylinders ist mit der Koppel eines Pflugkörpers oder aber mit der die Parallelführung bewirkenden Stange verbunden. Die beiden Hydraulikzylinder sind so dimensioniert und aufeinander abgestimmt, daß bei einer Rahmenverschwenkung mit einer Schnittbreitenverschwenkung beide Hydraulikzylinder gleichzeitig mit Drucköl beaufschlagt werden, so daß die Verschiebung der beiden Kolbenstangen gleichsinnig und in dem entsprechenden Maße geschieht, so daß mit der Rahmenverschwenkung die gewünschte Koppelverschwenkung und damit die Schnittbreitenverstellung eintritt. Soll die Schnittbreiteneinstellung beibehalten werden und lediglich der Pflugrahmen zum Drehen der Pflugkörper verschwenkt werden, so wird der zweite Hydraulikzylinder abgesperrt und lediglich der erste Hydraulikzylinder mit Drucköl beaufschlagt.

Weitere vorteilhafte Ausgestaltungen der Erfindung gehen aus den Unteransprüchen in Verbindung mit Zeichnung und Beschreibung hervor.

Mehrere Ausführungsbeispiele der Erfindung sind im folgenden anhand der Zeichnung näher beschrieben, in dieser zeigen:

Fig. 1        eine Draufsicht auf ein Ausführungsbeispiel eines erfindungsgemäß ausgebildeten Drehpfluges,

Fig. 2        eine Draufsicht auf ein zweites Ausführungsbeispiel gemäß der Erfindung, mit einem zwischen dem Pflugvordergestell und dem Pflugrahmen eingeschalteten Hebel,

Fig. 3 und 4   Draufsichten auf Abänderungen des Ausführungsbeispiels nach Fig. 2 und

Fig. 5        ein weiteres Ausführungsbeispiel in Draufsicht gemäß der Erfindung.

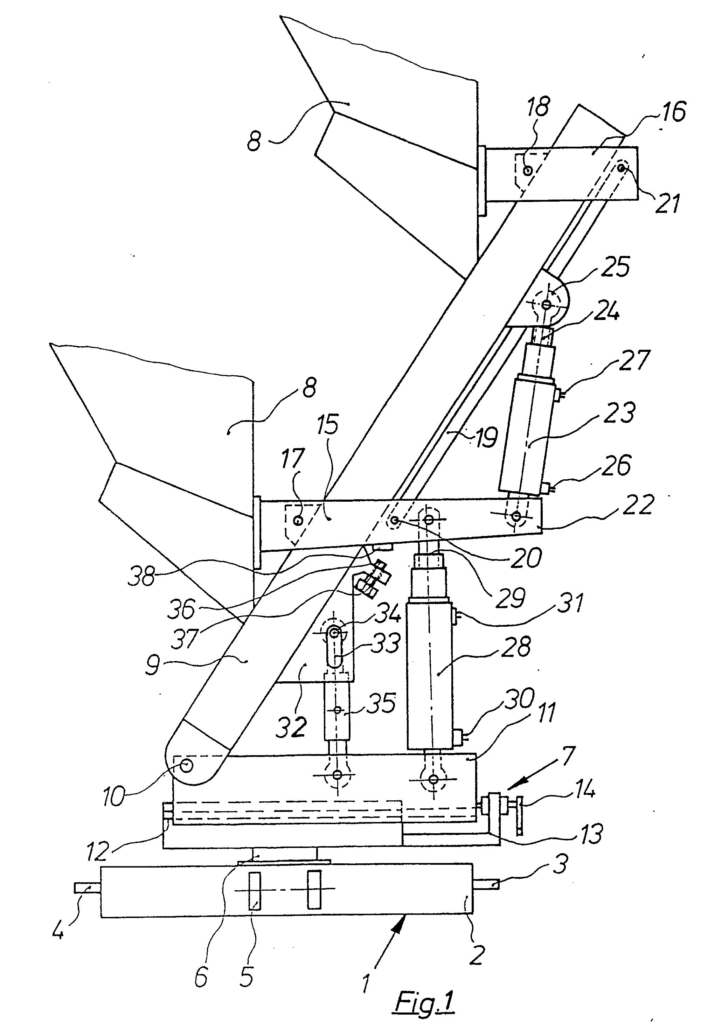

Fig. 1 zeigt einen erfindungsgemäß ausgebildeten Drehpflug in Draufsicht, wobei der Übersichtlichkeit halber die Drehvorrichtung weggelassen worden ist. Des weiteren fehlen die verstellbaren Endanschläge der Drehvorrichtung, mit deren Hilfe die Verkantung der Pflugkörper eingestellt wird. Des weiteren sind gleichfalls die oberen Pflugkörper nicht dargestellt. Der Pflug weist ein Pflugvordergestell 1 auf, an dem ein Pflugrahmen 9 über ein in der Arbeitsstellung lotrecht liegendes Gelenk 10 angeschlossen ist. Das Pflugvordergestell besteht aus einer Koppel 2, die Zapfen 3, 4 für den Anschluß der nicht dargestellten Unterlenker eines Schleppers aufweist. Der gleichfalls nicht dargestellte Oberlenker wird an einem Turm 5 der Koppel 2 angeschlossen. Die Koppel 2 nimmt des weiteren die Drehachse 6 auf, an der eine Breiteneinstellvorrichtung 7 herkömmlicher Art befestigt ist. Diese Breiteneinstellvorrichtung besteht aus einer Kulisse 11, in der ein Schiebestück 12 verschiebbar angeordnet ist. Am Schiebestück 12 ist ein Arm 13 angeordnet, in dem eine Spindel 14 drehbar angeordnet ist, mit der die Kulissenführung relativ zum Kulissenstein verschoben wird.

An der Kulisse 11 ist der Pflugrahmen 9 über das Gelenk 10 angeschlossen. Der Pflugrahmen 9 trägt mehrere Pflugkörper 8, die an Konsolen 15, 16 befestigt sind, die ihrerseits schwenkbar am Pflugrahmen 9 in einem Gelenk 17, 18 angeschlossen sind. Mit den Kulissen 15, 16 ist eine Stange 19 gelenkig verbunden, deren Anlenkpunkte 20, 21 jeweils den gleichen Abstand zu den Gelenken 17, 18 der Konsolen 15, 16 aufweisen.

Die Konsole 15 hat ein verlängertes Stück 22, an dessen Ende ein erster Hydraulikzylinder 23 angelenkt ist. Das andere Ende des Hydraulikzylinders 23, und zwar dessen Kolbenstange 24, ist an einer Nase 25 des Pflugrahmens 9 angelenkt. Der Hydraulikzylinder 23 ist ein doppelt wirkender Hydraulikzylinder und hat Anschlüsse 26, 27 für die Steuerleitungen, die nicht dargestellt sind.

An dem verlängerten Stück 22 der Konsole 15 ist ein weiterer, zweiter Hydraulikzylinder 28 mit seiner Kolbenstange 29 angelenkt. Das andere Ende des Hydraulikzylinders 28 ist an der Kulisse 11 des Pflugvordergestells 1 angelenkt. Dieser zweite Hydraulikzylinder 28 weist Anschlüsse 30, 31 für die nicht dargestellten Steuerleitungen auf.

Am Pflugrahmen 9 ist des weiteren ein Blech 32 angeschweißt, das ein Langloch 33 aufweist, in dem ein Zapfen 34 eines Spannschlosses 35 verschiebbar gelagert ist. Das andere Ende des Spannschlosses 35 ist an der Kulisse 11 des Pflugvordergestells 1 angelenkt. Die Größe des Langloches 33 bestimmt den möglichen Verschwenkwinkel des Pflugrahmens 9 relativ zum Pflugvordergestell. Des weiteren ist ein Anschlag 36 vorgesehen, der von einer Schraube gebildet wird, die in einer Bohrung 37 im Pflugrahmen 9 drehbar ist. Diese Schraube legt sich an einer Anschlagfläche 38 an der Konsole 15 an, so daß hierdurch die Ausfahrlänge des ersten Hydraulikzylinders 23 begrenzt wird. Mit dem Langloch 33 und dem Spannschloß 35 braucht dann somit nur die maximale Ausfahrlänge des zweiten Hydraulikzylinders 28 begrenzt zu werden, wobei diese durch Verstellen der Länge des Spannschlosses 35 einstellbar ist.

Durch die spezielle Anordnung der beiden Hydraulikzylinder 23, 28, die mit einem Ende an der Konsole 15 angeordnet sind und mit ihren anderen Enden jeweils am Pflugrahmen bzw. am drehbaren Teil 11 des Pflugvordergestells angelenkt sind, ist gewährleistet, daß der Pflugrahmen einmal verschwenkt werden kann, ohne daß sich die Lage der Konsolen 15, 16 relativ zum Pflugrahmen ändert und zum anderen derart, daß bei einer Verschwenkung des Pflugrahmens 9 gleichzeitig eine entsprechende Veränderung der Lage der Konsolen und damit der Größe der Schnittbreite der einzelnen Pflugkörper eintritt. Dies wird dadurch erreicht, daß der Hydraulikzylinder 28 abgesperrt wird, so daß dessen Länge sich beim Verschwenken des Pflugrahmens 9 nicht ändert. Die Verschwenkung als solche wird mit Hilfe des Hydraulikzylinders 23 vorgenommen, wobei der Hydraulikzylinder 28 als Lenker wirkt und gleichzeitig mit der Verschwenkung des Pflugrahmens 9 um seinen Anlenkpunkt 10 eine Verschwenkung der Pflugkörper 8 relativ zum Pflugrahmen bewirkt. Durch geeignete Wahl der Anlenkpunkte des Hydraulikzylinders 28 sowie der Konsole 15 am Pflugrahmen und des vorderen Schwenkpunktes 10 des Pflugrahmens kann bei dieser Verschwenkung gleichzeitig erreicht werden, daß eine Zugpunktverstellung erfolgt, wodurch die Zugkraftlinie wieder in den optimalen Bereich verschoben wird. Dies wird dann erhalten, wenn gleichzeitig bei der Verschwenkung des Pflugrahmens relativ zum Pflugvordergestell eine kleine Verschwenkung der Pflugkörper 8 nicht nur zum Pflugrahmen 9, sondern auch zum Pflugvordergestell eintritt.

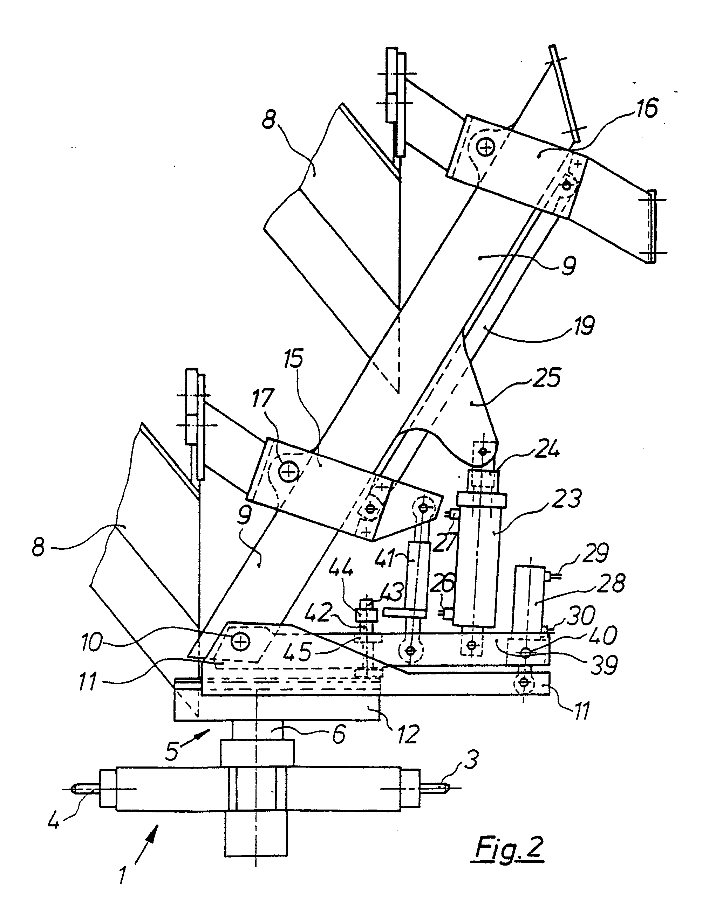

Bei dem Ausführungsbeispiel nach Fig. 2 sind gleiche Teile mit gleichen Bezugszeichen versehen. Dieses Ausführungsbeispiel unterscheidet sich von dem nach Fig. 1 dadurch, daß der erste Hydraulikzylinder 23 zwar mit seiner Kolbenstange 24 wiederum an einer Nase 25 des Pflugrahmens 9 angelenkt ist, daß jedoch das andere Ende des Hydraulikzylinders 23 an einem Hebel 39 angelenkt ist, der seinerseits schwenkbar am drehbaren Teil 11 des Pflugvordergestells 1 gelagert ist. Die Schwenkachse des Hebels 39 fällt mit der Schwenkachse 10 des Pflugrahmens 9 in diesem Ausführungsbeispiel zusammen. Der zweite Hydraulikzylinder 28 ist mit seinem einen Ende im Gelenk 40 am Hebel 39 angelenkt und mit seinem anderen Ende am drehbaren Teil 11 des Pflugvordergestells, und zwar an dessen Kulisse. Die Hydraulikzylinder 23 und 28 sind wiederum doppelt wirkende Hydraulikzylinder mit den Anschlüssen 26, 27 sowie 29, 30, wobei die zugehörigen Steuerleitungen nicht eingezeichnet sind.

Ein weiterer Unterschied dieses Ausführungsbeispiels zu dem nach Fig. 1 besteht darin, daß der zweite Hydraulikzylinder 28 nicht gleichzeitig den Lenker ersetzt, sondern daß ein Lenker 41 zusätzlich vorgesehen ist, der die Konsole 15 mit dem Hebel 39 verbindet. Dieser Lenker 41 ist als Spannschloß ausgebildet, so daß hierdurch das Maß der Verstellung der Pflugkörper 8 relativ zum Pflugrahmen bei der Verschwenkung des Pflugrahmens 9 einstellbar ist.

Des weiteren ist ein Anschlag 42 für die Begrenzung des Schwenkwinkels des Pflugrahmens 9 vorgesehen, der aus einer Gewindestange 43· besteht, die am Teil 11 des Pflugvordergestells befestigt ist. Auf der Gewindestange 43 ist eine Mutter 44 angeordnet, die als Anschlag für die maximale Ausfahrlänge des zweiten Hydraulikzylinder 28 dient. Ein am Hebel 39 befestigter Steg 45 wirkt mit der Mutter 44 zusammen.

Soll bei diesem Ausführungsbeispiel der Pflugrahmen einschließlich der Pflugkörper derart verschwenkt werden, daß sich die Schnittbreite aller Pflugkörper ändert, so bleibt der zweite Hydraulikzylinder 28 abgesperrt und der erste Hydraulikzylinder 23 betätigt. Das Maß der Verschwenkung der Pflugkörper 8 relativ zum Pflugrahmen 9 wird durch die Länge des Spannschlosses 41 sowie durch dessen Anlenkpunkte an der Konsole 15 und am Hebel 39 bestimmt. Soll der Pflugrahmen ausschließlich verschwenkt werden, ohne daß die Pflugkörper 8 ihre Lage relativ zum Pflugrahmen 9 verändern, so bleibt der erste Hydraulikzylinder 23 abgesperrt und der zweite Hydraulikzylinder 28 betätigt, so daß der Winkel relativ zwischen dem Hebel 39 und der Kulisse 11 verändert wird. Hierdurch ist eine Verschiebung des Schwerpunktes des Pflugrahmens vor bzw. nach dem Wenden der Pflugkörper möglich, ohne daß eine Relativverschwenkung der Pflugkörper zum Pflugrahmen und damit der Konsolen 15, 16 eintritt.

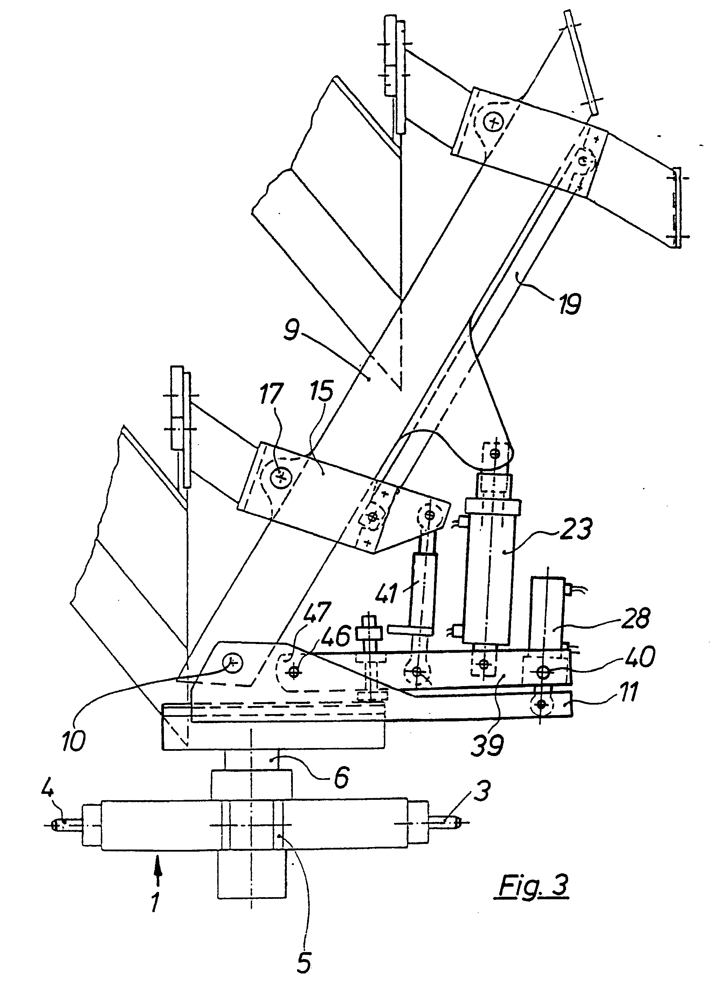

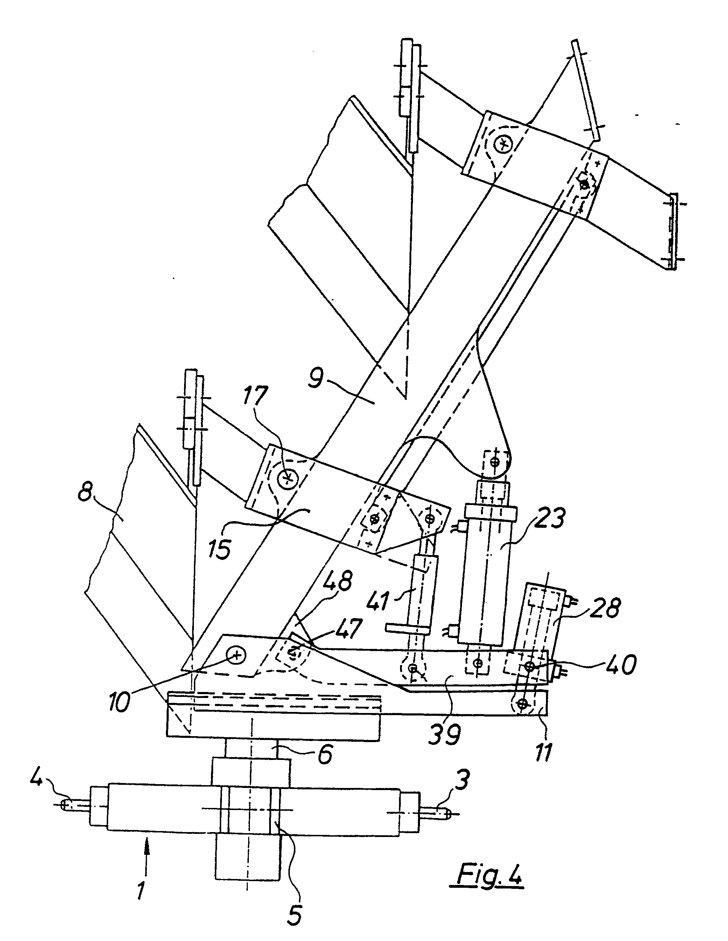

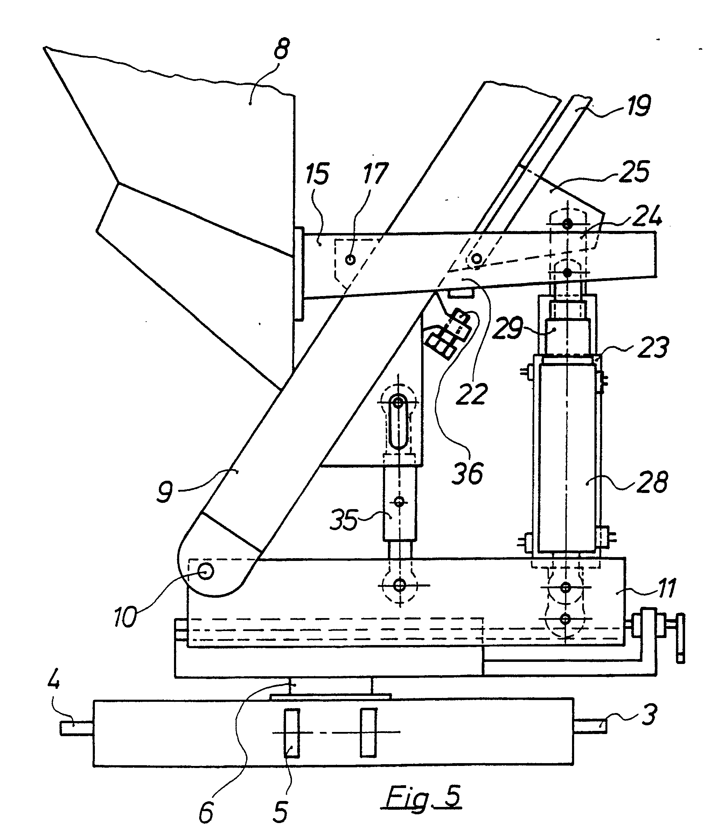

Das Ausführungsbeispiel nach Fig. 3 entspricht im wesentlichen dem nach Fig. 2, mit dem Unterschied, daß die Schwenkachse 46 des Hebels 39 nicht mehr mit der Schwenkachse 10 des Pflugrahmens 9 zusammenfällt, sondern an der Kulisse 11 des Pflugvordergestells 1 angeordnet ist. Jedoch ist die Schwenkachse 46 parallel zur Schwenkachse 10 des Pflugrahmens 9 angeordnet. Die Funktionsweise der Vorrichtung ist die gleiche wie anhand der Fig. 2 beschrieben.

Das Ausführungsbeispiel nach Fig. 4 entspricht im wesentlichen dem der Fig. 2 und 3, wobei gleiche Teile mit gleichen Bezugszeichen versehen sind. Der Unterschied zu den vorhergehenden Ausführungsbeispielen besteht in der Anlenkung des Hebels 39, und zwar ist der Hebel 39 mit seiner Schwenkachse 47 an einer Nase 48 des Pflugrahmens 9 angelenkt, wobei auch hier die Schwenkachse 47 parallel zur Schwenkachse 10 des Pflugrahmens 9 liegt. Die Funktionsweise des Pfluges ist die gleiche wie die der zuvor beschriebenen Ausführungsbeispiele.

In Fig. 5 ist ein weiteres Ausführungsbeispiel beschrieben, bei dem gleiche Teile mit gleichen Bezugszeichen versehen sind. Bei diesem Ausführungsbeispiel wird die Funktion des in den Fig. 2 bis 4 dargestellten Lenkers 41 von dem zweiten Hydraulikzylinder 28 mit übernommen. Der zweite Hydraulikzylinder 28 ist im Ausführungsbeispiel parallel zum ersten Hydraulikzylinder 23 geschaltet, wobei beide Hydraulikzylinder am verschiebbaren Teil 11 des Pflugvordergestells angelenkt sind. Die Kolbenstange 24 des Hydraulikzylinders 23 ist an einer Nase 25 des Pflugrahmens 9 und die Kolbenstange 29 des zweiten Hydraulikzylinders 28 an dem verlängerten Teil 22 der Konsole 15 angelenkt. Der Hydraulikzylinder 23, wie auch der Hydraulikzylinder 28 sind doppelt wirkende Hydraulikzylinder, wobei diese Hydraulikzylinder in ihren Querschnitten aufeinander derart abgestimmt sind, daß bei gleichzeitiger Beaufschlagung beider Hydraulikzylinder 23, 28 die beiden Kolbenstangen den gleichen Weg zurücklegen.

Die Funktionsweise der Vorrichtung ist folgende. Soll der Pflugrahmen 9 verschwenkt werden, wobei gleichzeitig eine Verschwenkung der Pflugkörper 8 relativ zum Pflugrahmen 9 und damit eine Verstellung der Schnittbreite aller Pflugkörper eintreten soll, so wird der zweite Hydraulikzylinder 28 abgesperrt, so daß dieser eine fixe Baulänge aufweist. Der zweite Hydraulikzylinder 28 bildet somit den Lenker, der die Konsole 15 mit dem drehbaren Teil 11 des Pflugvordergestells 1 verbindet. Bei einer Beaufschlagung des ersten Hydraulikzylinders 23 mit Drucköl wird dann bei einer Verschwenkung des Pflugrahmens gleichzeitig eine Verschwenkung der Konsole 15 und damit der Pflugkörper 8 relative zum Pflugrahmen 9 erhalten. Soll für das Wenden der Pflugkörper lediglich der Schwerpunkt des Pflugrahmens in oder in die Nähe der Wendeachse verschoben werden, so werden sowohl der erste Hydraulikzylinder 23 wie auch der zweite Hydraulikzylinder 28 gleichsinnig mit Drucköl beaufschlagt, so daß die beiden Kolbenstangen 24, 29 gleichsinnig ausfahren, so daß sich bei einer Verschwenkung des Pflugrahmens 9 die Lage der Konsolen 15, 16 relativ zum Pflugrahmen nicht ändert. Zur Begrenzung der Ausfahr- wie auch Einfahrlängen der beiden Hydraulikzylinder können Endanschläge vorgesehen sein, wie sie z.B. beim Ausführungsbeispiel nach Fig. 1 dargestellt sind.

**Patentansprüche**

1. Drehpflug mit einem Pflugvordergestell (1), mit einer Drehachse für das Wenden der Pflugkörper (8), mit einer Schnittbreiteneinstellvorrichtung für den ersten Pflugkörper (8) und einem gelenkig mit dieser verbundenen, die Pflugkörper (8) tragenden Pflugrahmen (9), der unmittelbar oder mittels zweier zwischen Pflugrahmen (9) und pflugvordergestell (1) angeschlossener Lenker mit dem um eine waagerechte, zur Fahrzeugachse parallele Achse drehbaren Teil (11) des Pflugvordergestells (1) verbunden ist, wobei die Pflugkörper (8) schwenkbar mittels einer Konsole (15) am Pflugrahmen (9) befestigt sind, alle Konsolen (15, 16) über eine eine Parallelführung bewirkende Stange (19) Untereinander Verbunden sind, zum Verschwenken des Pflugrahmens (9) ein zwischen diesem und dem Pflugvordergestell (1) wirkender Hydraulikzylinder (28) dient, die Konsole (15) eines der Pflugkörper (8) oder die die Parallelführung der Pflugkörper (8) bewirkende Stange (19) über einen Lenker mit dem Pflugvordergestell (1) verbunden ist und der Lenker mit der Konsole (15) des ersten Pflugkörpers (8), dem Pflugrahmen (9) und dem Pflugvordergestell (1) ein Gelenkviereck bildet, dadurch gekennzeichnet, daß der Pflugrahmen (9) gegenüber dem Pflugvordergestell (1) über einen ersten (23) und einen zweiten Hydraulikzylinder (28) abgestützt ist, daß der erste (23) und zweite Hydraulikzylinder (28) mit jeweils einem Ende am gleichen Bauteil des Pfluges angeschlossen sind, und daß das andere Ende des ersten Hydraulikzylinders (23) am Pflugrahmen (9) und das andere Ende des zweiten Hydraulikzylinders (28) an dem drehbaren, sonst aber nur längsverschiebbaren, als Kulissenstein wirkenden Teil (11) des Pflugvordergestells (1) angeschlossen ist.

2. Drehpflug nach Anspruch 1, dadurch gekennzeichnet, daß das Bauteil (11, 15), das zum gemeinsamen Anschluß des ersten und zweiten Hydraulikzylinders (23, 28) dient, relative zum Rahmen (9) oder zum Pflugvordergestell (1) schwenkbar ist.

3. Drehpflug nach Anspruch 1 oder 2, dadurch gekennzeichnet, daß der erste und der zweite Hydraulikzylinder (23, 28) an einer Verlängerung (22) der Konsole (15) des ersten Pflugkörpers (8) angeschlossen sind und daß das andere Ende des ersten Hydraulikzylinders (23) am Pflugrahmen (9) und das andere Ende des zweiten Hydraulikzylinders (28) am drehbaren Teil (11) des Pflugvordergestells (1) angeschlossen sind.

4. Drehpflug nach Anspruch 1, dadurch gekennzeichnet, daß der erste und der zweite Hydraulikzylinder (23, 28) am drehbaren Teil (11) des Pflugvordergestells (1) angelenkt sind und daß beide Hydraulikzylinder (23, 28) so bemessen sind, daß bei gleichzeitiger Beaufschlagung der Hydraulikzylinder mit Drucköl sich beide Anlenkpunkte des ersten und des zweiten Hydraulikzylinders (23, 28) am Pflugrahmen (9) bzw. an der Konsole (15) des ersten Pflugkörpers (8) oder an den mit diesen verbundenen Teilen sich gleichsinnig und gleichmäßig verschieben.

5. Drehpflug nach einem der Ansprüche 1 bis 4, dadurch gekennzeichnet, daß der zweite Hydraulikzylinder (28) gleichzeitig die Funktion des Lenkers (41) übernimmt und diesen ersetzt.

6. Drehpflug nach Anspruch 1, dadurch gekennzeichnet, daß der erste und der zweite Hydraulikzylinder (23, 28) an einem am Pflugvordergestell (1) oder -rahmen (9) schwenkbar gelagerten Hebel (39) angreifen, dessen Schwenkachse parallel zur Schwenkachse (10) des Pflugrahmens (9) liegt, daß das andere Ende des ersten Hydraulikzylinders (23) am Pflugrahmen (9) und das andere Ende des zweiten Hydraulikzylinders (28) am drehbaren Teil (11) des Pflugvordergestells (1) angelenkt ist und daß der Lenker (41) zwischen dem Hebel (39) und der Konsole (15) des ersten Pflugkörpers (8) bzw. an den mit diesen verbundenen, die Parallelführung übernehmenden Teilen (19) angeschlossen ist.

7. Drehpflug nach Anspruch 3 oder 6, dadurch gekennzeichnet, daß der erste Hydraulikzylinder (23) durch ein Spannschloß ersetzt ist.

8. Drehpflug nach einem der Ansprüche 1 bis 7, dadurch gekennzeichnet, daß die Schnittbreiteneinstellvorrichtung (7) aus einer parallel zu den Anlenkzapfen (3, 4) für die Unterlenker des Schleppers angeordneten Kulissenführung (11) besteht, in der ein Schiebestück (12) verschiebbar angeordnet ist.

9. Drehpflug nach einem der Ansprüche 1 bis 8, dadurch gekennzeichnet, daß zwischen dem drehbaren Teil (11) des Pflugvordergestells (1) und dem Pflugrahmen (9) bzw. dem Hebel (39) verstellbare Endanschläge (33, 34; 42) angeordnet sind, die zur Begrenzung des Schwenkwinkels des Pflugrahmens (9) dienen.

10. Drehpflug nach Anspruch 9, dadurch gekennzeichnet, daß die Endanschläge durch ein Spannschloß (35) gebildet sind, dessen eines Ende in einem Langloch (33) geführt ist.

11. Drehpflug nach Anspruch 9 oder 10, dadurch gekennzeichnet, daß das Langloch (33) in einer Platte (32) des Pflugrahmens (9) ausgebildet ist.

12. Drehpflug mit einem Pflugvordergestell (1), mit einer Drehachse für das Wenden der Pflugkörper (8), mit einer Schnittbreiteneinstellung für den ersten Pflugkörper (8) und einem gelenkig mit dieser verbundenen, die Pflugkörper (8) tragenden Pflugrahmen (9), der unmittelbar oder mittels zweier zwischen Pflugrahmen (9) und Pflugvordergestell (1) angeschlossener Lenker mit dem drehbaren Teil (11) des Pflugvordergestells (1) verbunden ist, wobei die Pflugkörper (8) schwenkbar mittels einer Konsole (15) am Pflugrahmen (9) befestigt sind, alle Konsolen (15) über eine eine Parallelführrung bewirkende Stange (19) untereinander verbunden sind, zum Verschwenken des Pflugrahmens (9) ein zwischen diesem und dem Pflugvordergestell (1) wirkender Hydraulikzylinder (28) dient, dadurch gekennzeichnet, daß der Pflugrahmen (9) gegenüber dem Pflugvordergestell (1) über einen ersten Hydraulikzylinder (23) abgestützt ist, daß ein zweiter Hydraulikzylinder (28) zwischen dem Pflugrahmen (9) und der Konsole (15) des ersten Pflugkörpers (8) eingeschaltet ist und daß die beiden Hydraulikzylinder (23, 28) so angeordnet und dimensioniert sind, daß bei gleichzeitiger Beaufschlagung der Hydraulikzylinder (23, 28) mit Drucköl gleichzeitig ein Verschwenken des Pflugrahmens (9) um seine reelle oder ideelle Schwenkachse (10) und eine Verschwenkung sämtlicher Pflugkörper (8) relativ zum Pflugrahmen (9) eintritt.

**Claims**

1. Rotary plough with a plough forecarriage (1), with a pivot shaft for the turning of the plough bodies (8), with a cutting width adjustment means for the first plough body (8) and a plough frame (9) pivotally connected to the said means and carrying the plough bodies (8), which frame, directly or by means of two links arranged between plough frame (9) and plough forecarriage (1), is connected to that part (11) of the plough forecarriage (1) which is rotatable about a horizontal shaft parallel to the vehicle axis, the plough bodies (8) being fixed to be pivotable by means of a bracket (15) on the plough frame (9), all brackets (15, 16) being connected to one another by way of a rod (19) causing a parallel guiding effect, a hydraulic cylinder (28) between the plough frame (9) and the plough forecarriage (1) serving for the rocking of the said frame, the bracket (15) of one of the plough bodies (8) or the rod (19) causing the parallel guiding of the plough bodies (8) being connected through a link with the plough forecarriage (1), and the link, with the bracket (15) of the first plough body (8), the plough frame (9) and the plough forecarriage (1), forming a four-bar linkage, characterised in that the plough frame (9) is supported relatively to the plough forecarriage (1) through a first hydraulic cylinder (23) and a second hydraulic cylinder (28), that the first (23) and second hydraulic cylinder (28) are respectively connected at one end on the same structural part of the plough, and that the other end of the first hydraulic cylinder (23) is connected on the plough frame (9) and the other end of the second hydraulic cylinder (28) is connected to the rotatable, but otherwise only longitudinally displaceable part (11) of the plough forecarriage (1), said part acting as a sliding block (11).

2. Rotary plough according to claim 1, characterised in that the structural part (11, 15), which serves for the common connection of the first and second hydraulic cylinders (23, 28), is swivellable relatively to the frame (9) or to the plough forecarriage (1).

3. Rotary plough according to claim 1 or 2, characterised in that the first and the second hydraulic cylinders (23, 28) are connected to an extension (22) of the bracket (15) of the first plough body (8) and that the other end of the first hydraulic cylinder (23) is connected on the plough frame (9) and the other end of second hydraulic cylinder (28) is connected on the rotatable part (11) of the plough forecarriage (1).

4. Rotary plough according to claim 1, characterised in that the first and the second hydraulic cylinders (23, 28) are linked on the rotatable part (11) of the plough forecarriage (1) and that both hydraulic cylinders (23, 28) are of such dimensions that, with simultaneous admission of oil under pressure to the hydraulic cylinders, both points of connection of the first and the second hydraulic cylinders (23, 28) on the plough frame (9) or respectively on the bracket (15) of the first plough body (8) or on those parts connected to these are uniformly displaced in the same direction.

5. Rotary plough according to one of the claims 1 to 4, characterised in that the second hydraulic cylinder (28) simultaneously takes over the function of the control member (41) and replaces this latter.

6. Rotary plough acccrding to claim 1, characterised in that the first and the second hydraulic cylinders (23, 28) act on a lever (39) pivotally mounted on the forecarriage (1) or frame (9) of the plough, the pivot axis of said lever lying parallel to the pivot axis (10) of the plough frame (9), that the other end of the first hydraulic cylinder (23) is pivoted on the plough frame and the other end of the second hydraulic cylinder (28) is pivoted on the rotatable part (11) of the plough forecarriage (1) and that the connecting rod (41) is connected between the lever (39) and the bracket (15) of the first plough body (8) or respectively to those parts (19) connected thereto and assuming the parallel guiding function.

7. Rotary plough according to claim 3 or 6, characterised in that the first hydraulic cylinder (23) is replaced by a turnbuckle.

8. Rotary plough according to one of the claims 1 to 7, characterised in that the adjustment means (7) for the cutting width consist of a connecting guideway (11) which is arranged parallel to the coupling pins (3, 4) for the bottom connectors of the tractor, in which guideway is displaceably arranged a slidable member (12).

9. Rotary plough according to one of the claims 1 to 8, characterised in that adjustable end stops (33, 34; 42) are arranged between the rotatable part (11) of the plough forecarriage (1) and the plough frame (9) or the lever (39), said stops serving to limit the swinging angle of the plough frame (9).

10. Rotary plough according to claim 9, characterised in that the end stops are formed by a turnbuckle (35), one end of which is guided in a slot (33).

11. Rotary plough according to claim 9 or 10, characterised in that the slot (33) is formed in a plate (32) of the plough frame (9).

12. Rotary plough, having a plough forecarriage (1), with a pivot shaft for the turning of the plough bodies (8), with a cutting width adjustment for the first plough body (8) and a plough frame (9) carrying the plough bodies (8) and pivotally connected to said body, which frame, directly or by means of two links connected between plough frame (9) and plough forecarriage (1), is connected to the rotatable part (11) of the plough forecarriage (1), the plough bodies (8) being pivotally secured by means of a bracket (15) on the plough frame (9), all brackets (15) being connected to one another by a rod (19) causing a parallel guiding effect, and for the swinging of the plough frame (9), there is provided a hydraulic cylinder (28) acting between the said frame and the plough forecarriage (1), characterised in that the plough frame (9) is supported with respect to the plough forecarriage (1) by means of a first hydraulic cylinder (23), that a second hydraulic cylinder (28) is interposed between the plough frame (9) and the brackets (15) of the first plough body (8) and that the two hydraulic cylinders (23, 28) are so arranged and are of such dimensions that, with simultaneous admission of oil under pressure to the hydraulic cylinders (23, 28), the result is a, simultaneous rocking of the plough frame (9) about its real or ideal pivot axis (10) and a swinging of all plough bodies (8) relatively to the plough frame (9).

**Revendications**

1. Charrue réversible comportant :
un châssis avant de charrue (1), avec un axe de rotation pour retourner les corps de charrue,
un dispositif pour ajuster la largeur de travail pour le premier corps de charrue (8) et un bâti de charrue (9), relié par articulation avec ce dernier, et portant les corps de charrue (8), et qui, directement ou au moyen de deux bras d'articulation montés entre le bâti de charrue (9) et le châssis avant de charrue (1), est relié avec la partie (11) du châssis avant de charrue (1) que l'on peut faire tourner autour d'un axe horizontal parallèle à l'axe du véhicule tracteur, étant entendu que :
les corps de charrue (8) sont fixés pivotants sur le bâti de charrue (9) au moyen d'une console (15),
toutes les consoles (15, 16) sont reliées entre elles par l'intermédiaire d'une tige (19) réalisant un guidage parallèle,

un vérin hydraulique (28), agissant entre le bâti de charrue (9) et le châssis avant de charrue (1), sert au pivotement du bâti de charrue (9),

la console (15) de l'un des corps de charrue (8), ou la tige (19) réalisant le guidage parallèle des corps de charrue (8), est reliée, par l'intermédiaire d'un bras, avec le châssis avant de charrue (1),

et le bras forme, avec la console (15) du premier corps de charrue (8), avec le bâti de charrue (9) et avec le châssis avant de charrue (1), un quadrilatère articulé,

caractérisée en ce que :

le bâti de charrue (9) s'appuie contre le châssis avant de charrue (1) par l'intermédiaire d'un premier vérin hydraulique (23) et d'un deuxième vérin hydraulique (28),

en ce que le premier (23) et le deuxième vérin hydraulique (28) sont raccordés chacun à une extrémité sur la même pièce constitutive de la charrue,

et en ce que l'autre extrémité du premier vérin hydraulique (23) est raccordée au bâti de charrue (9) et l'autre extrémité du deuxième vérin hydraulique (28) est raccordée à la partie rotative (11) du châssis avant de charrue (1), qui peut autrement se déplacer seulement dans le sens de la longueur et agit comme coulisseau.

2. Charrue réversible suivant la revendication 1, caractérisée en ce que la pièce constitutive (11, 15), servant à relier ensemble le premier et le deuxième vérin hydraulique (23, 28) peut pivoter par rapport au bâti (9) ou par rapport au châssis avant (1) de la charrue.

3. Charrue réversible suivant la revendication 1 ou la revendication 2, caractérisée en ce que le premier et le deuxième vérin hydraulique (23, 28) sont raccordés à un prolongement (22) de la console (15) du premier corps de charrue (8) et en ce que l'autre extrémité du premier vérin hydraulique (23) est raccordée au bâti de charrue (9) et l'autre extrémité du deuxième vérin hydraulique (28) est raccordée à la partie qui peut tourner (11) du châssis avant (1) de la charrue.

4. Charrue réversible suivant la revendication 1, caractérisée en ce que le premier et le deuxième vérin hydraulique (23, 28) s'articulent sur la partie rotative (11) du châssis avant (1) de la charrue et en ce que les deux vérins hydrauliques (23, 28) sont dimensionnés de telle façon qu'en alimentant simultanément les vérins hydrauliques en huile sous pression, les deux points d'articulation du premier et du deuxième vérin hydraulique (23,28), respectivement sur le bâti de charrue (9) et sur la console (15) du premier corps de charrue (8), ou sur les pièces reliées avec eux, se déplacent dans le même sens et de la même quantité.

5. Charrue réversible suivant l'une quelconque des revendications 1 à 4, caractérisée en ce que le deuxième vérin hydraulique (28) assure en même temps la fonction du bras (41), et remplace ce dernier.

6. Charrue réversible suivant la revendication 1, caractérisée en ce que le premier et le deuxième vérin hydraulique (23, 28) agissent sur un levier (39) monté pivotant sur le châssis avant (1) ou le bâti de charrue (9), et dont l'axe de pivotement est parallèle à l'axe de pivotement (10) du bâti de charrue (9), en ce que l'autre extrémité du premier vérin hydraulique (23) s'articule sur le bâti de charrue (9) et l'autre extrémité du deuxième vérin hydraulique (28) s'articule sur la partie rotative (11) du châssis avant (1) de la charrue et en ce que le bras (41), est disposé entre le levier (39) et la console (15) du premier corps de charrue (8), ou aux pièces (19) réalisant le guidage parallèle et qui sont reliées à ce premier corps de charrue.

7. Charrue réversible suivant la revendication 3 ou la revendication 6, caractérisée en ce que le premier vérin hydraulique (23) est remplacé par un tendeur.

8. Charrue réversible suivant l'une quelconque des revendications 1 à 7, caractérisée en ce que le dispositif de réglage de largeur de coupe (7) est constitué d'un guidage de coulisse (11) disposé parallèlement aux tourillons d'articulation (3, 4) pour les bras inférieurs du tracteur, guidage dans lequel peut se déplacer un coulisseau (12).

9. Charrue réversible suivant l'une quelconque des revendications I à 8, caractérisée en ce qu'entre la partie rotative (11) du châssis avant de la charrue (1) et le bâti de charrue (9), ou le levier (39), sont disposées des butées de fin de course (33, 34; 42), réglables, qui servent à limiter l'angle de pivotement du bâti de charrue (9).

10. Charrue réversible suivant la revendication 9, caractérisée en ce que les butées de fin de course sont formées d'un tendeur (35), dont une extrémité est guidée dans un trou oblong (33).

**11.** Charrue réversible suivant la revendication 9 ou la revendication 10, caractérisée en ce que le trou oblong (33) est réalisé dans une plaque (32) du bâti de charrue (9).

**12.** Charrue réversible comportant :

un châssis avant de charrue (1), avec un axe de rotation pour retourner les corps de charrue,

un dispositif de réglage de la largeur de travail pour le premier corps de charrue (8) et un bâti de charrue (9), relié par articulation avec ce dernier, et portant les corps de charrue (8), et qui, directement ou au moyen de deux bras d'articulation montés entre le bâti de charrue (9) et le châssis avant de charrue (1), est relié avec la partie rotative (11) du châssis avant de charrue (1),

étant entendu que :

les corps de charrue (8) sont fixés, avec possibilité de pivotement, sur le bâti de charrue (9) au moyen d'une console (15),

toutes les consoles (15) sont reliées entre elles par l'intermédiaire d'une tige (19) réalisant un guidage parallèle,

un vérin hydraulique (28), agissant entre le bâti de charrue (9) et le châssis avant de charrue (1), sert au pivotement du bâti de charrue (9),

caractérisée en ce que :

le bâti de charrue (9) s'appuie contre le châssis avant de charrue (1) par l'intermédiaire d'un premier vérin hydraulique (23),

en ce qu'un deuxième vérin hydraulique (28), est intercalé entre le bâti de charrue (9) et la console (15) du premier corps de charrue (8)

et en ce que les deux vérins hydrauliques (23, 28) sont disposés et dimensionnés de telle façon qu'en alimentant simultanément les vérins hydrauliques avec de l'huile sous pression, il se produit un pivotement du bâti de charrue (9) autour de son axe de pivotement (10), réel ou fictif, et un pivotement de tous les corps de charrue (8) par rapport au bâti de charrue (9).

_Fig.1_

*Fig.2*

Fig. 3

13

*Fig.4*

*Fig. 5*